# EUROPÄISCHE PATENTSCHRIFT

(11) **EP 4 412 880 B1**
(45) Veröffentlichungstag und Bekanntmachung des Hinweises auf die Patenterteilung: **09.09.2026**
(21) Anmeldenummer: 22751378.5
(22) Anmeldetag: 19.07.2022
(51) Int. Cl.: B60W 30/14, B60W 30/16, B60W 50/08

(54) **VERFAHREN ZUR EINSTELLUNG EINES GRUPPENFAHRTMODUS BEI EINEM GESCHWINDIGKEITS- UND/ODER ABSTANDSREGELUNGSSYSTEMS EINES EINSPURIGEN KRAFTFAHRZEUGS**
METHOD FOR SETTING A GROUP DRIVING MODE IN A SPEED AND/OR DISTANCE CONTROL SYSTEM OF A SINGLE-TRACK MOTOR VEHICLE
PROCÉDÉ DE RÉGLAGE D'UN MODE DE CONDUITE DE GROUPE DANS UN SYSTÈME DE COMMANDE DE VITESSE ET/OU DE DISTANCE D'UN VÉHICULE À MOTEUR À VOIE UNIQUE

(30) Priorität: 05.10.2021 DE 102021211214
(43) Veröffentlichungstag der Anmeldung: 14.08.2024
(73) Patentinhaber: Robert Bosch GmbH, 70442 Stuttgart (DE)
(72) Erfinder: GRELAUD, Mathieu, 71638 Ludwigsburg (DE); VETTER, Daniel, 74354 Besigheim (DE); HELLMANN, Felix, 71691 Freiberg A.N. (DE); OSHIDA, Yuki, Yokohamashi Kanagawa, 2248501 (JP)
(86) Internationale Anmeldenummer: PCT/EP2022/070134
(87) Internationale Veröffentlichungsnummer: WO 2023/057105

(56) Entgegenhaltungen:
- EP-A1- 3 800 099
- DE-A1- 102019 201 141
- DE-A1- 102019 205 881

## Beschreibung

### Stand der Technik

Die DE 10 2016 224 913 A1 offenbart ein Verfahren zur selbsttätigen Einstellung der Geschwindigkeit eines Motorrads in Abhängigkeit des Längsabstands sowie des Seitenabstands des Motorrads zu einem vorausfahrenden und/oder seitlich fahrenden Fremdfahrzeug, wobei ein einzuhaltender Mindestseitenabstand (b) zwischen dem Motorrad und dem Fremdfahrzeug in Abhängigkeit des Fahrzeugtyps des Fremdfahrzeugs bestimmt wird.

DE 10 2019 201 141 A1 ermöglicht es dem Fahrer eines einspurigen Fahrzeugs, während einer Gruppenfahrt mittels einer dedizierten Eingabevorrichtung ein links oder rechts vorausfahrendes Fahrzeug als Zielfahrzeug auszuwählen.

### Offenbarung der Erfindung

Die Erfindung betrifft ein Verfahren zur Einstellung eines Gruppenfahrtmodus gemäß Anspruch 1.

Gemäß einer nicht-beanspruchten Ausgestaltung, kann es sich bei dem zweiten Bedienelement um ein Schaltelement handeln, welches einen nach links weisenden Zustand bzw. eine nach links weisende Stellung, einen nach rechts weisenden Zustand bzw. eine nach rechts weisende Stellung sowie eine Neutralstellung einnehmen kann und dass der nach links weisende Zustand zu der Auswahl eines nach links versetzt vorausfahrenden Zielobjekts durch das Geschwindigkeits- und/oder Abstandsregelungssystem führt und dass der nach rechts weisende Zustand zu der Auswahl eines nach rechts versetzt vorausfahrenden Zielobjekts durch das Geschwindigkeits- und/oder Abstandsregelungssystem führt. Bei diesem zweiten Bedienelement kann es sich z.B. um einen von der Neutralposition nach rechts und links auslenkbaren Drehschalter, einen nach rechts und links kippbaren Kippschalter oder einen nach rechts und links verschiebbaren Schiebeschalter handeln.

Beim ersten Bedienelement kann es sich z.B. um einen Taster oder einen Schalter handeln.

Erfindungsgemäß handelt es sich bei dem zweiten Bedienelement um die Fahrtrichtungsanzeigerbetätigungsvorrichtung bzw. den Blinkerhebel, wobei die Aktivierung des nach links weisenden Fahrtrichtungsanzeigers zu der Auswahl eines nach links versetzt vorausfahrenden Zielobjekts durch das Geschwindigkeits- und/oder Abstandsregelungssystem führt und die Aktivierung des nach rechts weisenden Fahrtrichtungsanzeigers zu der Auswahl eines nach rechts versetzt vorausfahrenden Zielobjekts durch das Geschwindigkeits- und/oder Abstandsregelungssystem führt.

Eine vorteilhafte Ausgestaltung der Erfindung ist dadurch gekennzeichnet, dass die Auswahl des Zielobjekts während der Fahrt erfolgt.

Eine vorteilhafte Ausgestaltung der Erfindung ist dadurch gekennzeichnet, dass es sich bei dem einspurigen Kraftfahrzeug um ein Motorrad handelt.

Weiter umfasst die Erfindung eine Vorrichtung, enthaltend Mittel, die zur Durchführung der erfindungsgemäßen Verfahren ausgestaltet sind. Dabei handelt es sich insbesondere um ein Steuergerät, in welchem der Programmcode der erfindungsgemäßen Verfahren hinterlegt ist.

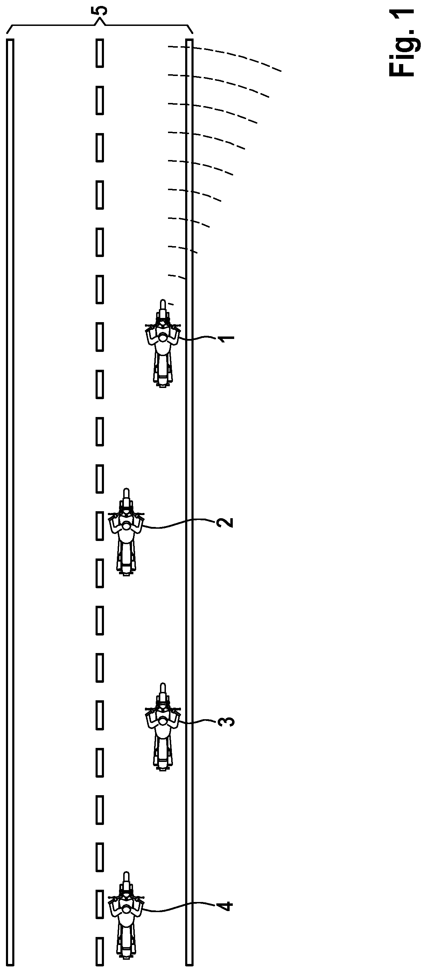

Die Zeichnung umfasst Fig. 1 In Fig. 1 sind in Draufsicht vier Motorräder 1, 2, 3 und 4 auf einer Fahrbahn 5 dargestellt, welche sich von links nach rechts bewegen.

Geschwindigkeits- und/oder Abstandsregelungssysteme sind zumeist radarbasiert und erlauben einem damit ausgestatteten Kraftfahrzeug, einem als Zielobjekt identifizierten vorausfahrenden Fahrzeug automatisch zu folgen. Im Falle einer Beschleunigung der Zielobjekts beschleunigt das Kraftfahrzeug ebenfalls bis zum Erreichen einer voreingestellten Maximalgeschwindigkeit. Im Falle einer Verzögerung des Zielobjekts verzögert das Kraftfahrzeug ebenfalls.

Im Motorradbereich spielen Gruppenfahrten eine wichtige Rolle. Diese können durch den Einsatz von Geschwindigkeits- und/oder Abstandsregelungssystemen komfortabler und sicherer durchgeführt werden. Im Falle einer Gruppenfahrt spielt die korrekte Auswahl des Zielobjekts durch das Radarsystem eine entscheidende Rolle. Das ist dadurch begründet, dass die Motorräder bei einer Gruppenfahrt häufig seitlich versetzt zueinander fahren, wie es in Fig. 1 dargestellt ist. Dies muss in der Auswahl des Zielobjekts durch das Radarsystem der Motorrads berücksichtigt werden. Deshalb muss dem Radarsystem die Information gegeben werden, zu welcher Seite hin das vorausfahrende Zielobjekt seitlich versetzt ist.

In Fig. 1 sind vier Motorräder 1, 2, 3 und 4 auf einer Fahrbahn 5 dargestellt, welche sich auf der rechten Fahrspur seitlich abwechselnd versetzt von links nach rechts bewegen.

Motorrad 1 fährt am äußeren Rand der rechten Fahrspur und hat sein Geschwindigkeits- und/oder Abstandsregelungssystem im normalen Betriebsmodus aktiviert.

Motorrad 2 folgt in Richtung innere Fahrspurseite versetzt. Sein Geschwindigkeits- und/oder Abstandsregelungssystem befindet sich im Gruppenfahrtmodus und der Fahrer hat eingestellt, dass sich das Zielobjekt nach links versetzt vor ihm befindet. Das ist durch die Betätigung des ersten Bedienelements, z.B. eines Tasters oder Schalters, zur Aktivierung des Gruppenfahrtmodus und die anschließende Betätigung des linken Blinkers bzw. die Verschiebung eines Schalters auf die linke Seite erfolgt.

Motorrad 3 folgt daraufhin in Richtung äußere Fahrspurseite versetzt. Sein Geschwindigkeits- und/oder Abstandsregelungssystem befindet sich im Gruppenfahrtmodus und der Fahrer hat eingestellt, dass sich das Zielobjekt nach rechts versetzt vor ihm befindet. Das ist durch die Betätigung des ersten Bedienelements, z.B. eines Tasters oder Schalters, zur Aktivierung des Gruppenfahrtmodus und die anschließende Betätigung des rechten Blinkers oder die Verschiebung eines Schalters auf die rechte Seite erfolgt.

Motorrad 4 folgt auf Motorrad 3 nach innen versetzt und bildet den Schluss der Gruppe. Sein Geschwindigkeits- und/oder Abstandsregelungssystem befindet sich im Gruppenfahrtmodus und der Fahrer hat eingestellt, dass sich das Zielobjekt nach links versetzt vor ihm befindet. Das ist durch die Betätigung des ersten Bedienelements, z.B. eines Tasters oder Schalters, zur Aktivierung des Gruppenfahrtmodus und die anschließende Betätigung des linken Blinkers bzw. die Verschiebung eines Schalters auf die linke Seite erfolgt.

## Patentansprüche

1. Verfahren zur Einstellung eines Gruppenfahrtmodus bei einem Geschwindigkeits- und/oder Abstandsregelungssystems eines einspurigen Kraftfahrzeugs, bei welchem
- mittels eines ersten Bedienelements ein Gruppenfahrtmodus bei dem Geschwindigkeits- und/oder Abstandsregelungssystem aktiviert wird und
- nach Aktivierung des Gruppenfahrmodus mittels eines zweiten Bedienelements eingestellt wird, ob ein nach links oder ein nach rechts versetzt vorausfahrendes Objekt als Zielobjekt für das Geschwindigkeits- und/oder Abstandsregelungssystem des Kraftfahrzeugs ausgewählt werden soll, **dadurch gekennzeichnet, dass** es sich bei dem zweiten Bedienelement um die Fahrtrichtungsanzeigerbetätigungsvorrichtungen handelt, wobei die Aktivierung des nach links weisenden Fahrtrichtungsanzeigers zu der Auswahl eines nach links versetzt vorausfahrenden Zielobjekts durch das Geschwindigkeits- und/oder Abstandsregelungssystem führt und die Aktivierung des nach rechts weisenden Fahrtrichtungsanzeigers zu der Auswahl eines nach rechts versetzt vorausfahrenden Zielobjekts durch das Geschwindigkeits- und/oder Abstandsregelungssystem führt.

2. Verfahren nach Anspruch 1, **dadurch gekennzeichnet, dass** die Auswahl des Zielobjekts während der Fahrt erfolgt.

3. Verfahren nach Anspruch 1, **dadurch gekennzeichnet, dass** es sich bei dem einspurigen Kraftfahrzeug um ein Motorrad handelt.

4. Vorrichtung, enthaltend Mittel, die zur Durchführung der erfindungsgemäßen Verfahren ausgestaltet sind.

## Claims

1. Method for setting a group riding mode in a speed and/or distance control system of a single-track motor vehicle, in which method
- a group riding mode is activated by means of a first operating element in the speed and/or distance control system, and
- after activating the group riding mode, a second operating element is used to set whether an object travelling in front and offset to the left or an object travelling in front and offset to the right is to be selected as the target object for the speed and/or distance control system of the motor vehicle, **characterized in that** the second operating element is the direction indicator actuating devices, wherein the activation of the left-facing direction indicator leads to the selection of a target object travelling in front and offset to the left by the speed and/or distance control system, and the activation of the right-facing direction indicator leads to the selection of a target object travelling in front and offset to the right by the speed and/or distance control system.

2. Method according to Claim 1, **characterized in that** the selection of the target object is carried out during the journey.

3. Method according to Claim 1, **characterized in that** the single-track motor vehicle is a motorcycle.

4. Device, comprising means which are designed for carrying out the methods according to the invention.

## Revendications

1. Procédé de réglage d'un mode de conduite de groupe dans un système de régulation de vitesse et/ou de distance d'un véhicule automobile à voie unique, dans lequel
- un mode de conduite de groupe est activé dans le système de régulation de vitesse et/ou de distance au moyen d'un premier élément de commande, et
- la question de savoir si un objet qui précède de manière décalée vers la gauche ou vers la droite doit être sélectionné comme objet cible pour le système de régulation de vitesse et/ou de distance du véhicule automobile est réglée après l'activation du mode de conduite de groupe au moyen d'un deuxième élément de commande, **caractérisé en ce que** le deuxième élément de commande est les dispositifs d'actionnement d'indicateur de direction de déplacement, l'activation de l'indicateur de direction de déplacement pointant vers la gauche menant à la sélection d'un objet cible qui précède de manière décalée vers la gauche par le système de régulation de vitesse et/ou de distance, et l'activation de l'indicateur de direction de déplacement pointant vers la droite menant à la sélection d'un objet cible qui précède de manière décalée vers la droite par le système de régulation de vitesse et/ou de distance.

2. Procédé selon la revendication 1, **caractérisé en ce que** l'objet cible est sélectionné pendant le trajet.

3. Procédé selon la revendication 1, **caractérisé en ce que** le véhicule automobile à voie unique est une moto.

4. Dispositif contenant des moyens qui sont configurés pour la mise en œuvre du procédé selon l'invention.
